Europäisches Patentamt

European Patent Office

Office européen des brevets

(19)

(11) Publication number: **0 219 251**

**A2**

(12) # EUROPEAN PATENT APPLICATION

(21) Application number: 86307369.8

(51) Int. Cl.⁴: **G06F 15/72**

(22) Date of filing: 25.09.86

(30) Priority: 11.10.85 GB 8525174

(43) Date of publication of application:
**22.04.87 Bulletin 87/17**

(84) Designated Contracting States:
**DE FR GB**

(71) Applicant: **Quantel Limited**
**Kenley House Kenley Lane**
**Kenley Surrey CR2 5YR(GB)**

(72) Inventor: **Miles, Barry Donald Ruberry**
**14 Chesterfield Road**
**Newbury Berkshire(GB)**

(74) Representative: **Logan, Allan Beattie**
**c/o Quantel Limited Engineering Facility Kiln**
**Road Shaw**
**Newbury Berkshire RG13 2HA(GB)**

(54) **Improvements in video image processing systems.**

(57) A processing circuit which is arranged to operate in three modes. The first mode is to act as a brush processor in video graphics creation combining incoming video signals with stored video signals to produce a graphic signal. The second mode allows an image to be composed from two or more input pictures using stencil signals. The third mode is useful in still picture applications where one frame is to be viewed and the next previewed. Stencil signals allow the operator to cut or fade from one frame to the other.

Fig. 5.

EP 0 219 251 A2

## IMPROVEMENTS IN VIDEO IMAGE PROCESSING SYSTEMS

Background of the Invention

This invention relates to improvements in video image processing systems particularly those which include the combination of two or more incoming video signals under the control of a control signal.

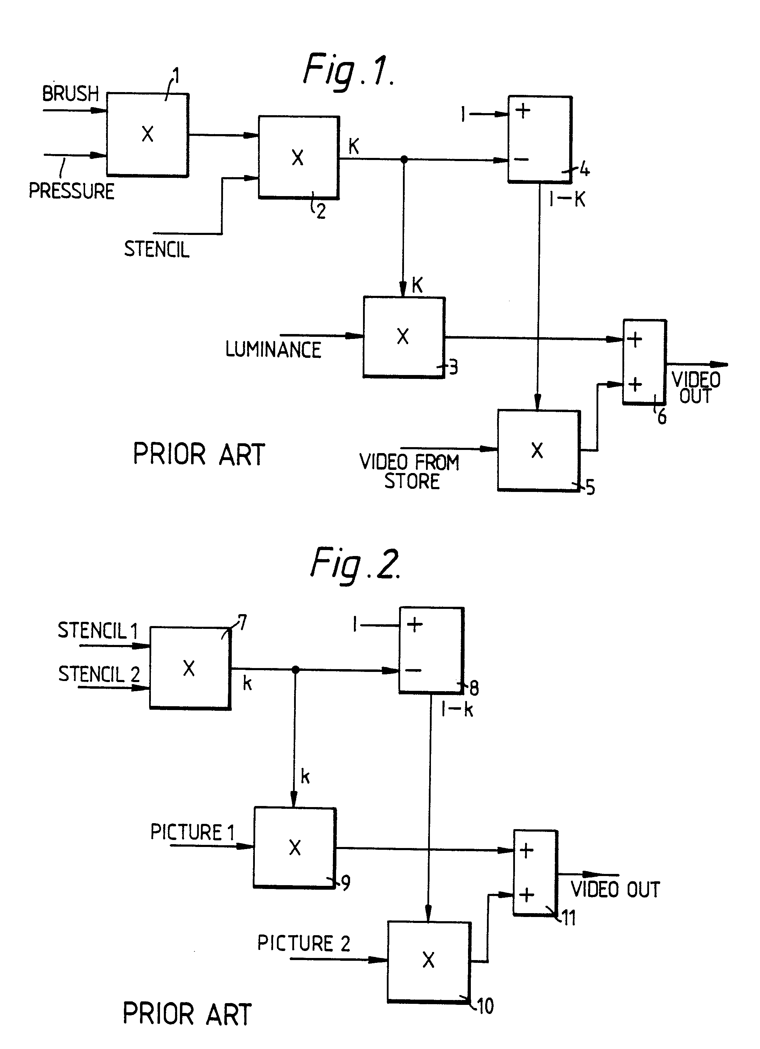

Three prior systems for this type of processing are shown in Figs. 1-3. Although the processing is carried out is a similar manner by all three the inputs and outputs of each system are different.

In video graphics equipment there are two requirements that can be met by this type of processor, the need to produce new images under operator control to give the effect of painting and to combine signals from two or more sources of image signals so that the output image can contain areas of image signals from one or all the sources. The circuit shown in Fig. 1 is a so-called the brush processor, described in UK 2089625 (which is incorporated herein by reference), used in Quantel's video graphic system to create new images. In this system the image is produced by combining new video signals representing luminance or chrominance with signals stored in a framestore in proportions determined by a control signal K. The luminance and chrominance signals to be used are chosen by the operator as is also the notional artists implement to be used in the creation. Command signals can be input to the system by the operator by the use of a stylus and touch tablet to identify image points at which 'paint' is to be 'applied'. The control signal K for each identified image point is produced at the output of multiplier 2 in Fig. 1 and results from the multiplication of first a brush signal, which is a signal relating to the distribution power of the notional implement chosen by the operator, second a signal relating to the pressure applied by the operator to the stylus and third a stencil signal. The operation of a stencil in this system is analogous to that in the conventional artists equipment. Where the operator has not chosen to use a stencil this signal will be set to 1 and so K will be simply brush signal times pressure. K will always be a value between 0 and 1. The processing is done picture point by picture point but K may be precalculated for each picture point as described in co-pending EP application no 86302545.8, however this will not effect the operation of this circuit.

Referring only to luminance signal, although similar processing is applied to chrominance signals, the output is produced by multiplying the incoming luminance chosen by the operator by K in multiplier 3 and adding this to the luminance times 1-K in 5. The luminance applied to 5 is the luminance generated for the particular picture point from previous operations of the system. It will be obvious that the output is then K L in + (1-K) L store, where L in is the incoming luminance and L store is the luminance stored at that point. It is found that this processing gives a very realistic image.

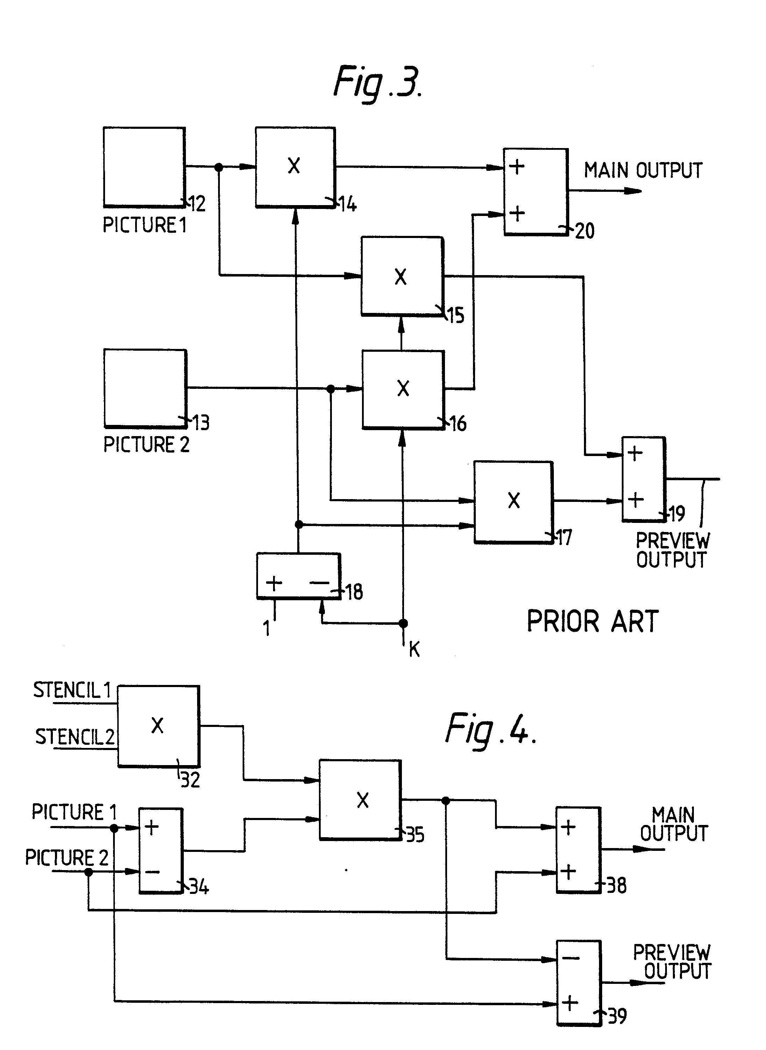

Fig. 2 shows a processor which can combine two picture sources in a way which produces an output image which contains different areas of each image as described in UK Patent No. 2113950 - (which is incorporated herein by reference). Where one image is moved relative to the second, parts of the that image may be made to appear as they move in front of objects in the stationary image. Each picture source is provided with a stencil signal which consists of signals for each picture point having a value between 0 and 1 and these signals are multiplied together to provide a control signal k at the output of multiplier 7. The control signal k is again a digital signal with a value between 0 and 1 and is used to determine the proportions in which the two picture signals are combined. It is to be understood that in this system also separate processing paths will be provided for luminance and chrominace signals. In this system, means are provided for displacing one set of the picture signals, and the corresponding stencil signals, relative to the other set, and allows part of the image to be moved around a second image by the operator until the correct postion is found when the composite image can then be processed to be part of the final image.

The output from adder 11 in Fig. 2 is kP1 + (1-k)P2 where P1 is a signal from the first picture source and P2 is a signal from the second picture source. The circuit components needed to achieve this are the same components as in 2 to 6 Fig. 1 arrangement but the circuits are not usually combined. By calculating the stencil signals for each picture source it can be provided that where those areas in picture 1 are to appear on the output image k will be large and vice versa, where picture 2 is to appear. Additional circuitry is of course provided to produce the addressing and to move one picture relative to the second.

The prior art system shown in Fig. 3 is a processor used in still store systems which may be part of a video graphics system. In these systems one facility that is desirable is to be able to view the contents of one store and at the same time preview the contents of a second store and to be able to cut or fade from one to the other. The control value K in the processing in this case can be used then to achieve fade by gradually changing from 1 to 0 or cut by changing more abruptly. Two still pictures are stored in framestores 12 and 13 and then output to the multipliers 14-17. The factor K is applied as a second input to multipliers 15 and 16 and 1-K to multiplier 14 and 17 and it will be obvious from Fig. 3 that the main ouput from 20 consists of KP2 + (1-K)P1, and the preview output from 19 consists of KP1, + (1-K)P2. As K changes from 0 to 1 then the image stored in framestore 12 will disappear at the main output from 20 and reappear at the preview output from 19. All three circuits described operate on a point by point basis and with suitable additional components can provide a displayed image.

Although the components used in these prior art systems are well known, the implementation of these processors in hardware can be very costly. The processor for the still store is rather more expensive that the other two because of the large number of multipliers involved.

## Summary of the invention

The aim of the present invention is to provide a means for carrying out these three types of processing which is less expensive in terms of components.

According to the invention there is provided, a video processing circuit comprising:

a) at least two sources of video signals representing different pictures;

b) a source of signals representing brush shape;

c) a video graphic means including a stylus device for producing a control signal which is a function of said brush shape signals and pressure on said stylus;

d) a source of graphic signals for points on a picture designated by said stylus device;

e) a source of stencil signals;

f) framestore means having a writing input and a reading output;

g) a processing circuit having two video inputs for two video signals $L_1$ and $L_2$ and a control input for control signal K and arranged to produce output signals representing $K L_1 + (1-K) L_2$;

h) selector means for conditioning the system to operate selectively in any one of a plurality of different modes including;

(1) a mode having said source of graphics video signals connected to one video input of said processing circuit, said output of said framestore connected to the second video input of said processing circuit, the output of said processing circuit being written into said framestore,

said control signal of said video graphic means connected to said control input of said processing circuit, and (2) a second mode having said two sources of video signals connected to said two video inputs of said processing circuits, said control input of said processing circuit connected to said source of stencil signals.

Further according to the present invention there is provided a video processing system comprising,

input means for video signals from a plurality of sources,

input means for a plurality of signals,

selector means for selecting video signals from more than one source and for selecting one or more control signals,

combining means for combining said selected control signals to produce a combined control signal,

processing means for combining the selected video signals in proportions determined by said combined control signal, said processing means being capable of operating in more than one mode, producing one video output which is the combination of two or more input signals,

and the second mode producing two video outputs with one output being the input signals combined in the reverse proportions to the combination of the signals in the other output, and means for selecting the mode of operation of the processing means.

## Brief Description of the Drawings

One embodiment of the invention will now be described with reference to the following diagrams.

Fig. 1 shows a prior art brush processor.

Fig. 2 shows a prior art combiner.

Fig. 3 shows a prior art processor from a still store system.

Fig. 4 shows one embodiment of the invention.

Fig. 5 shows a second embodiment of the invention.

## Detailed Description of the Invention

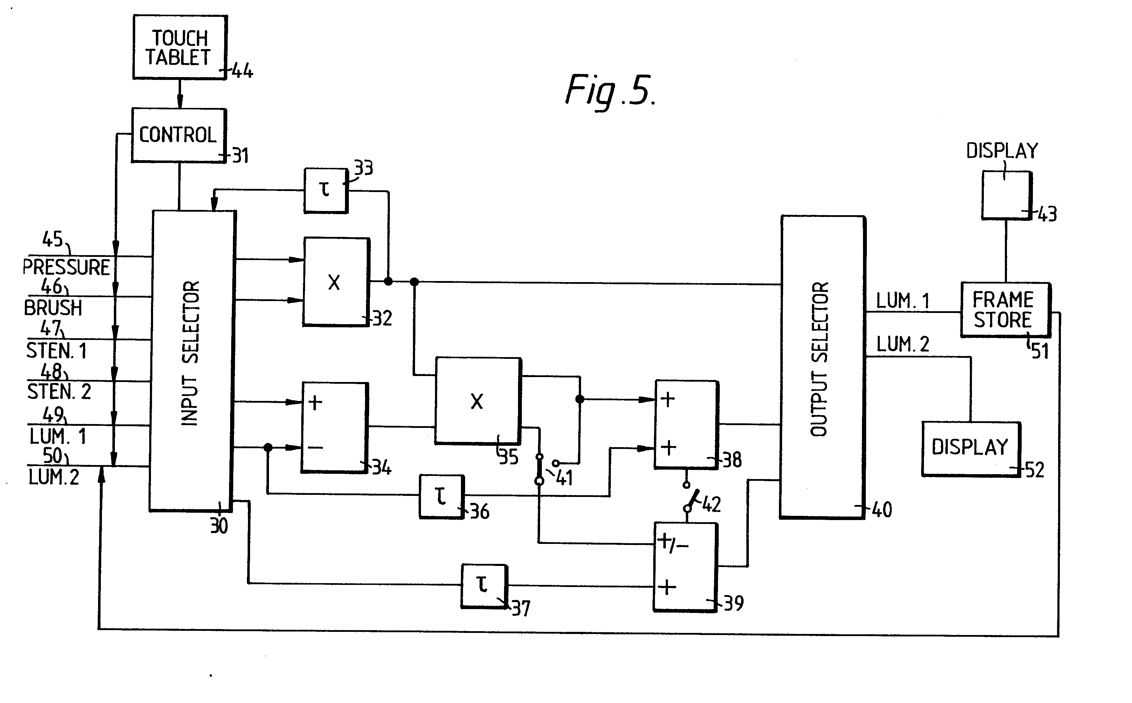

Reference first to Figure 5, the processor shown in this figure is capable of achieving all the results produced by the three prior art circuits described above with what can be seen as a considerable saving in components. The input selector 30 selects any of a number of control signals and video signal inputs the selection being dependent on the mode in which the circuit is to operate.

The operation of the circuit will now be described for each of the three processes mentioned previously but referring to luminance signals only.

When the circuit is to operate as a brush processor for video graphics systems the operator provides signals via the control 31 which cause input selector 30 to select luminance from the framestore (not shown) as the luminance 2 (L2) (50) input and new luminance (49) as luminance 1 - (L1) input and also selects brush signals which represent graphic parameters of chosen implements, a pressure signal and a stencil signal as the control signals. The operator of the video graphics system causes the image to be generated by 'drawing on a touch tablet with a pressure sensitive stylus'. In order to combine the control signals, values of brush (46) and pressure signals (45) for a pixel of the image are input to multiplier 32 before that pixel is present on the input to the processor and the output of multiplier 32 is delayed in delay 33 until the corresponding pixel arrives. The product of brush (46) and pressure (45) is then reapplied to the multiplier 32 with the stencil 1 signal, to form a second product. Luminance values L1 and L2 are presented to the subtractor 34 at this time and the difference L1-L2 is applied to the multiplier 35 to be multiplied by the said second product of brush (46), pressure (45) and stencil 1. It will be understood that where there is no stencil signal and if the pressure signal and the brush are combined before being input to the processor, the brush signal and pressure signals may simply be input at the same time as the luminance signals. The output from multiplier 32 is the control signal K used in the processing and is, say, an 8 bit digital signal representing a number between 0 and 1. The incoming luminance signals are also 8 bit digital signals. Subtractor 34 provides as an output (L1-L2) and this is applied to multiplier 35 as one input while the second input is the K signal. The output of this multiplier is K(L1-L2) and the most significant bits of these output bits pass to adder 38 whilst the remaining pass via switch 41 to component 39 which in this case acts as an adder. Adder 38 receives as a second input the luminance L2 from the store L2 delayed in delay 36, and the output from the adder is KL1 + (1-K)L2 which is the new picture point and this can be stored in the framestore at the correct address and can also be viewed on a display. The second adder 39 is provided for the reminder because if K is very small information will be lost if only the first 8 bits are used. For the first pass the second input to the adder will be zero and after that will be the output of adder 39. When the value has accumulated beyond the eight bits in this output switch 42 operates to increase the output produced in adder 38 by the correct amount. This is a well known technique for these types of system.

It will be obvious that the operation of the circuit is much the same as described above when two images are to be combined. In this case the inputs are luminance signals representing two images and the control signals are the stencil signals (47, 48) corresponding to those images. The images to be combined may in fact have been produced by a video graphics system in the way described above and the stencils could also have been produced in a graphics system. The two stencil signals are multiplied in multiplier 32 to give the control signal K which can be selected by the output selector to form the stencil signal for the resultant image as well as being applied to multiplier 35. The output image may be viewed on a display. The facility for using the remainder of the output of 35 is not required in this processing.

The operation of the apparatus in Fig. 5 when switched to third mode corresponds to that in Fig. 4. Considering Fig. 4, in order to provide the fade or cut from one image to the other in the output, two stencil signals are multiplied together in multiplier 32 to give the control signal K. These stencil signals are calculated to give the desired effect. Video signals representing two images are input from two framestores to subtractor 34 the output of which is applied to multiplier 35. The output of multiplier 35, which is K(P1-P2), is provided as an input to adder 38 which also receives the signals from the second picture source giving an output of KP1 + (1-K)P2. Subtractor 39 receives an input of K(P1-P2) but subtracts this from P1 to give the preview output of KP2 + (1-K)P1. It can be seen that this circuit gives the same outputs as the circuits in Fig. 3 but using fewer multipliers which gives a saving in cost.

To achieve this mode of operation using the Figure 5 arrangement signals from the control 31 input selector 30 select the correct stencil signals and signals from two luminance stores. Switch 41 is switched to its second position thus connecting the adder/subtractor 39 to the top 8 bit output of multiplier 35 and switch 42 is in its open postion to disconnect 38 from 39. In this mode component 39 is forced to act as a subtractor and receives as a second input luminance information from the first picture source. It will be obious that this configuration is equivalent to that in Fig. 4. The output selector provides the main output on the luminance 1 path and the preview output on the luminance 2 path and these can be delayed separately.

Although described only in terms of luminance signals this system may be made to handle chrominance signals by simply replacing the luminance inputs by chrominance signals.

It is to be understood that by providing different inputs and outputs signals the processing system of the invention is not limited to the application discussed above.

## Claims

1. A video processing circuit comprising:

a) a source (46) of signals representing brush shape;

b) a video graphic means (44, 31, 32) including a stylus device for producing a control signal which is a function of said brush shape signals and pressure on said stylus;

c) a source (49) of graphic signals for points on a picture designated by said stylus device;

d) a source of stencil signals (47, 48);

e) framestore means (51) having a writing input and a reading output;

f) a processing circuit (30-42) having two video inputs for two video signals $L_1$ and $L_2$ and a control input for a control signal K and arranged to produce output signals representing $K L_1 + (1-K) L_2$;

characterised by,

g) at least two sources of video signals representing different pictures (49, 50);

h) selector means (30, 40) for conditioning the system to operate selectively in any one of a plurality of different modes including;

(1) a mode having said source (49) of graphics video signals connected to one video input of said processing circuit, said output of said framestore (51) connected to the second video input (50) of said processing circuit, the output of said processing circuit being written into said framestore,

said control signal of said video graphic means connected to said control input of said processing circuit, and (2) a second mode having said two sources (49, 50) of video signals connected to said two video inputs of said processing circuits, said control input of said processing circuit connected to said source (47, 48) of stencil signal.

2. A system as in Claim 1 further characterised in that said source of stencil signals comprises a multiplier (32) for multiplying two stencil signals related respectively to said two sources of video signals.

3. A system as in Claim 1 further characterised by a display for the output signals of the processing circuit.

4. A video processing system as in claim 1 characterised in that said processing circuit is arranged to produce a second output signal representing $KL_2 + (1-K) L_1$ and said video inputs of said processing circuits are connected to said two sources of pictures and said control input connected to said source of stencil signals.

5. A system as in Claim 4 further characterised by a display for each of said outputs of said processing circuit.

6. A video processing system comprising input means for video signals from a plurality of sources (49, 50), input means for a plurality of control signals (45-48), processing means (33-39) for combining the input video signals in proportions determined by the control signals, characterised by,

selector means (30) for selecting video signals from more than one source and for selecting one or more control signals,

combining means 832) for combining said selected control signals to produce a combined control signal,

and in that,

said processing means (33-39) is capable of operating in more than one mode, one mode producing one video output which is the combination of two or more input signals,

and the second mode producing two video outputs with one output being the input signals combined in the reverse proportions to the combination of the signals in the other output, and means for selecting the mode of operation of the processing means.

7. A system as in Claim 6 further characterised by means including a touch tablet and stylus (44) for designating points of graphic image;

input means (49) for video signals to be applied to said points;

input means (46) for brush signals representing the graphic parameter to be used to create that point on the image;

means (45) for providing a signal representing the pressure on the stylus;

framestore means (51) for storing signals representing the graphic image;

wherein,

said selector means (30) selects as a first video input said video signals to be applied and as a second video input signals stored in said framestore (51) for said designated points and said control selector (30) means selects as control signals said brush signals and said pressure signals;

and said processing means operates in the first mode to produce as output signals graphic signals to produce the image.

8. A system as in Claim 6 characterised in that:

said selector means (30) selects as a first input - (49) video signals representing a first picture, and as a second input (50) video signals representing a second picture,

said control selector means selects as a first control signal (47) first stencil signals associated with said first picture,

and as a second control signal (48) second stencil signals associated with said second pictures;

and said processing means operates in the first mode to produce as an output signals representing an image composed of the two input pictures.

9. A system as in Claim 6 wherein said processing means comprises in the first mode;

means (34) for producing the difference between the two video inputs;

means (35) for multiplying said difference by the combined control signals;

and means (38) for adding the control signal multiplied by said difference to the second video input.

10. A system as in Claim 6 wherein said processing means comprises in the second mode;

means (34) for producing the difference between the two video inputs;

means (35) for multiplying said difference by the combined control signal,

means (38) for producing the sum of the output of the multiplier with one of said inputs;

and means (39) for producing the difference between said output and the other of said input signals;

and means (43, 52) for displaying said sum and means for display said difference.

11. A video processing comprising:

input means (49, 50) for video signals representing a plurality of images;

operator controlled means (44, 31) for producing video signals representing a graphic input;

source means for (47, 48) stencil signals;

a source (46) of control signals representing graphic parameters;

characterised by,

arithmetic processor means having two functional states, in one of said states said processor means function to combine video signals from said input means to produce edited video signals under the control of said stencil signals, and in the other said state said processor means function to combine video signals from said input means representing a selected image with said graphic input in response to said control signal to produce graphically modified video signals;

means (40) being provided for selecting one or other of said functional states so that the apparatus can be utilised at different times for editing or for graphic production.

# Fig.1.

BRUSH

PRESSURE

STENCIL

LUMINANCE

VIDEO FROM
STORE

K

1−K

K

I

VIDEO
OUT

PRIOR ART

# Fig.2.

STENCIL 1

STENCIL 2

PICTURE 1

PICTURE 2

k

1−k

k

I

VIDEO OUT

PRIOR ART

## Fig.3.

PICTURE 1 — 12

X — 14

X — 15

X — 16

X — 17

MAIN OUTPUT

PICTURE 2 — 13

+ + — 20

+ + — 19

+ − — 18

1

K

PREVIEW OUTPUT

PRIOR ART

## Fig.4.

STENCIL 1

STENCIL 2

X — 32

PICTURE 1

PICTURE 2

+ − — 34

X — 35

+ + — 38

MAIN OUTPUT

− + — 39

PREVIEW OUTPUT

Fig.5.